# EUROPEAN PATENT APPLICATION

(11) **EP 4 574 569 A1**
(43) Date of publication of application: **25.06.2025**
(21) Application number: 23218653.6
(22) Date of filing: 20.12.2023
(51) Int. Cl.: B60Q 1/14, B60Q 1/26, H05B 45/48, B60Q 1/20, B60Q 1/28, B60Q 1/44, B60Q 1/48

(54) **AUTOMOTIVE LUMINOUS DEVICE**

(71) Applicant: Valeo Vision, 93012 Bobigny Cedex (FR)
(72) Inventor: MARTINEZ-PEREZ, Jose-Ramon, 23600 Martos (ES); CANTUDO, Miguel-Angel, 23600 Martos (ES); VILLAR-RAMOS, Ana, 23600 Martos (ES); MONTANO, Maria-Del-Carmen, 23600 Martos (ES); FERNANDEZ, Ricardo, 23600 Martos (ES); PENA, Miguel-Angel, 23600 Martos (ES)
(74) Representative: Valeo Visibility

(57) **Abstract**

The present invention provides an automotive luminous device (10), comprising:
- a first group of light sources (1);
- a second group of light sources (2);
- a first by-pass branch (3) comprising a first switch (5), that is connected in parallel with the first group of light sources; and
- a driver (4).

The driver (4) is configured to manage electric supply for the first group of light sources (1) and for the second group of light sources (2). The driver (4) is also configured to open and close the first switch (5) to activate the first group of light sources to provide a first lighting function in combination with the second group of light sources when the first switch (5) is open, and to activate the second group of light sources to provide a second lighting function when the first switch (5) is closed.

Finally, the device includes an optical element (9) to project receiving light outside the luminous device.

## Description

### Technical field

This invention belongs to the field of automotive luminous devices and the usage of light sources for different lighting and signalling functions.

### State of the art

Automotive lighting market can be considered one of the most competitive ones and new functions are constantly required.

These devices are in charge of many different lighting and signalling functions. To provide these functions, different light sources, such as Light Emitting Diodes (LEDs) are usually employed. These LEDs when fed by an appropriate current are able to provide the luminous flux required by these functions.

Each function has a different requirement concerning colour and luminous intensity. Hence, different LEDs are usually used for each function. Further, each module has a different location within the device, and cooperates with a different optical element (reflectors, lenses, lightguides, etc). This need or incorporating different lighting modules leads to a bulkier light system, which is not compatible with the space constraint of certain car models.

The present invention provides an alternative solution for this problem.

### Summary of the invention

The present invention provides a solution for these problems by means of an automotive luminous device, comprising:
- a first group of light sources, the first group comprising a first entry node and a first exit node;
- a second group of light sources, the second group comprising a second entry node and a second exit node, wherein the second group of light sources is arranged in series with the first group of light sources;
- a driver configured to receive a command from a control module and to manage electric supply for the first group of light sources and for the second group of light sources.

According to the invention, the luminous device further comprises a first by-pass branch connecting the first entry node with the first exit node by the interposition of a first switch. Besides, the driver is configured to open and close the first switch in function of the command received from the control module, wherein the driver is configured to activate the first group of light sources to provide a first lighting function in combination with the second group of light sources when the first switch is open, and to activate the second group of light sources to provide a second lighting function when the first switch is closed. Finally, the luminous device also comprises an optical element being configured to receive the light from the first group of light sources and from the second group of light sources when the first switch is open, or from the second group of light sources when the first switch is closed and being configured to project the receiving light outside the luminous device.

In other words, the first switch has two states, noting that it is the driver that controls the state of the switch:
- an open state during which current flows to the first group of light sources and to the second group of light sources, activating them to perform the first lighting function; and
- a closed state in which the current bypasses the first group of light sources and feeds the second group of light sources, so that the second group of light sources is switched on alone to perform the second lighting function, which is different from the first lighting function.

With this device, two different lighting functions, projected by the same optical element, may be operated by a single driver. The driver remains unaltered in its operation, and there is no need to provide a printed circuit board for each functionality. The total amount of light sources is minimised while keeping the operation simple.

Here, a command corresponds to a lighting instruction. A "lighting instruction" may include parameter(s) related to the lighting function that needs to be realized, such as the light flux (measurement unit: lumen) or the luminous intensity (measurement unit: candela). A control module can be an electronic control unit (ECU) as an engine management system implemented in the vehicle. The automotive lighting device is thus intended to interact with the control unit at the vehicle level.

Each group of light sources comprises at least one light source. When there are more than one light source, these light sources within the corresponding light source group can be arranged in series or in parallel. The first group is arranged with respect to the second group in series, so that the first by-pass branch only creates a by-pass channel for the first group: when the first switch is closed, the current goes through the first by-pass instead of through the first group, so the first group does not receive power supply and the second group are the only light sources that provide light. When the switch is open, the current goes through the first and second group of light sources, providing a more intense light output. As seems evident, the role of first group and second group is exchangeable, since the first group and the second group are connected in series, so that the switch can control the current between the second entry node and the second exit node, instead of first ones. Further, the switch can be integrated in the driver, forming a driver group comprising the driver and the switch.

The driver device is arranged to manage the electric supply of the light sources. The luminous device comprises a power source, which can be external to the luminous device. The driver may be located at different positions and with different electric connections to manage the electric supply that runs through the light sources.

In some particular embodiments, the driver may include a current converter, for example DC/DC converter of the type of the type Buck, Boost, SEPIC, Flyback or also linear driver. Further, the driver may include a tunable power supply component.

In some particular embodiments, the driver is also configured to provide a different voltage for the group of light sources depending on the instructions received from the control module.

When two different lighting functions are to be provided, it is possible that each one requires a different nominal current value, so it is possible that the needed voltage is different.

In some particular embodiments, the light sources are solid-state light sources. The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas. These light sources are specifically advantageous, since they provide the required luminous properties for the automotive regulations with a high efficiency and reliability.

In some particular embodiments, the automotive luminous device further comprises:
- a third group of light sources, the third group comprising a third entry node and a third exit node, wherein the third group of light sources is arranged in series with the first group of light sources and with the second group of light sources; and
- a second by-pass branch, connecting the first entry node or the second entry node with the third entry node by the interposition of a second switch;
wherein
- the driver is further configured to provide electric supply for the third group of light sources, the driver being also configured to open and close the second switch, and also configured to activate the third group of light sources to provide a third lighting function when the second switch is closed; and
- the optical element is further configured to receive the light from the third group of light sources and project it outside the luminous device.

The concept of the invention may be extended to more than two different functions: a further switch is used to extend the possible operation scenarios.

In some particular embodiments, the third lighting function is a fog light function or a turning indicator function.

These functions may be provided by the same lighting module, to achieve a compact design.

In some particular embodiments, the first switch and/or the second switch comprises a transistor, such as a Bipolar Junction Transistor or a Metal Oxide Semiconductor Field-Effect Transistor.

Any of these elements can be chosen. Metal Oxide Semiconductor Field-Effect Transistors are usually preferred due to their easy polarisation requirements.

In some particular embodiments, the first group of light sources and/or the second group of light sources comprises at least two light sources arranged in series.

In some particular embodiments, the optical element comprises a light guide, a reflector, a diffusing screen or a combination of at least two of the above elements.

An optical element is an element that has some optical properties to receive a light beam and emit it in a certain direction and/or shape, as a person skilled in automotive lighting would construe without any additional burden. Reflectors, collimators, light guides, projection lenses, etc., or the combination thereof are some examples of these optical elements which are useful for transforming the light beams emitted by the light source into an acceptable light pattern for the functionality chosen for the lighting device.

In this specific case, light guides, alone or in combination with diffusing screens, would be especially suitable for the present invention, since the involved lighting functionalities are usually projected by light guides.

In some particular embodiments, the light sources are installed in a substrate which may comprise printed circuits, the substrate being otherwise called printed circuit board (PCB). For example, the first group of light sources and the second group of light sources are arranged on a same support, preferably on a same printed circuit board.

In some particular embodiments, the electronic substrate is a rigid electronic substrate. Alternatively, the substrate can be made flexible.

A rigid substrate should be understood in the sense of what the skilled person would construe. A skilled person knows the difference between a rigid substrate and a flexible substrate. Although every material is "flexible" in the sense that it has a stress-strain curve, a substrate which does not deform by its own weight when held by one of its ends is deemed to be rigid, while a substrate which suffer a substantial deformation when held by one of its ends is considered to be flexible. In any case, board manufacturers offer a "flexible" model and a "rigid" model, while any skilled person knows the difference between them.

In some particular embodiments, the first lighting function is a position light function and the second lighting function can be a function chosen among daytime running light function or brake light function.

In a further inventive aspect, the invention provides an automotive headlamp or rear lamp comprising an automotive luminous device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

### Brief list of drawings and reference numbers

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

[Fig 1] shows an automotive lighting device according to the invention, which is installed in a vehicle.

[Fig 2] shows an electronic arrangement of some elements of the automotive lighting device of Figure 1.

[Fig 3] and [Fig 4] show different states of the electronic assembly of Figure 2.

[Fig 5] shows an alternative electronic arrangement of some elements of an automotive lighting device according to the invention.

[Fig 6] shows a feature of the invention which can be combined with any of the previous embodiments.

In these figures, the following reference numbers have been used:
- 1: First group of LEDs
- 2: Second group of LEDs
- 3: First by-pass branch
- 4: Driver
- 5: First witch
- 6: Third group of LEDs
- 7: Second by-pass branch
- 8: Second switch
- 9: Lightguide
- 10: Automotive lighting module
- 11: First entry node
- 12: First exit node
- 13: Second entry node
- 14: Second exit node
- 15: First terminal of the driver
- 16: Second terminal of the driver
- 17: Third terminal of the driver
- 18: Additional group of LEDs
- 100: Automotive headlamp

### Detailed description of the invention

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

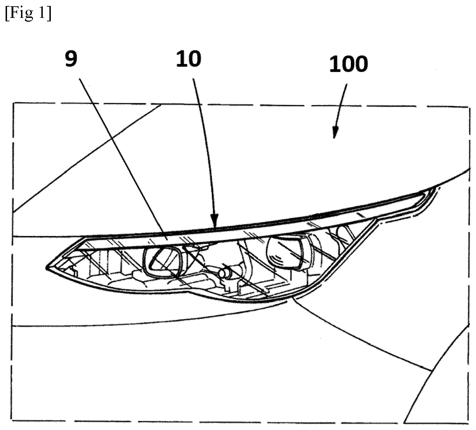

Figure 1 shows an automotive lighting device 10 according to the invention, which is installed in a vehicle 100. Specifically, this automotive lighting device 10 is a lighting module integrated in a headlamp 100 , which is configured to provide the functionalities of Daytime Running Light (DRL) and Position Light at the same time, by means of the same lightguide 9.

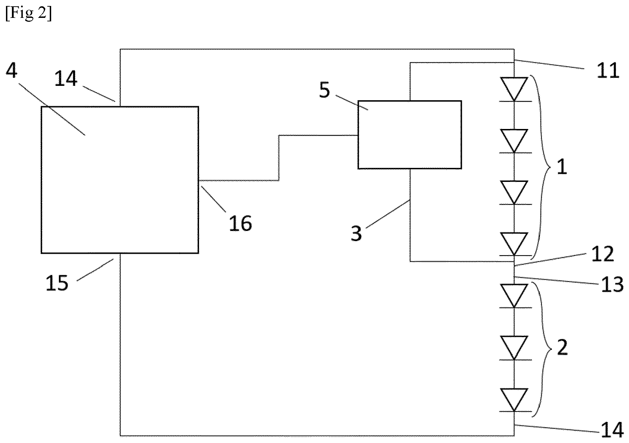

Figure 2 shows an electronic arrangement of some elements of the automotive lighting device of Figure 1.

This electronic arrangement comprises a first group of LEDs 1, a second group of LEDs 2, a first by-pass branch 3 and a driver 4.

The first group of LEDs 1 comprises four LEDs arranged in series. This first group of LEDs comprises a first entry node 11 and a first exit node 12. The second group of LEDs 2 comprises three LEDs arranged in series. The second group of LEDs comprises a second entry node 13 and a second exit node 14. The second entry node 13 is arranged at the same electric potential as the first exit node 12, since the first group of LEDs 1 and the second group of LEDs 2 are arranged in series.

There is also a first by-pass branch 3 arranged between the first entry node 11 and the second entry node 13. This first by-pass branch 3 comprises a switch 5, which in this case is a Metal Oxide Semiconductor Field-Effect Transistor (MOSFET). A Bipolar Junction Transistor (BJT) or any other semiconductor element which may work as a switch could also be used for this purpose.

The driver 4 is arranged to manage the electric supply received by the first group of LEDs 1 and by the second group of LEDs 2. In this Figure 2, the driver receives the electric supply and has a first terminal 15 connected to the first entry node 11 and a second terminal 16 connected to the second exit node 14. A third terminal 17 of driver 4 is in charge of controlling the switch 5.

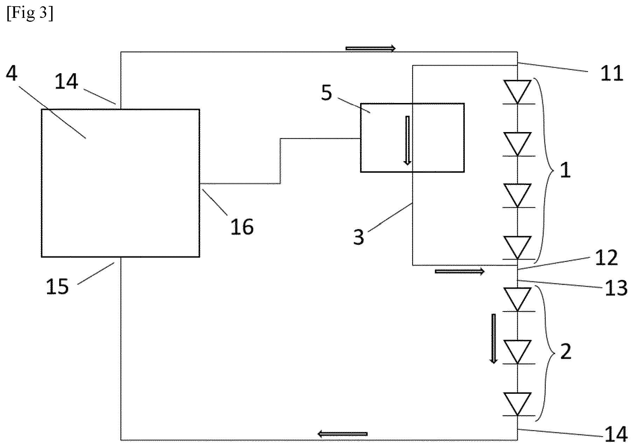

Figure 3 shows a first state of this electronic assembly.

In this figure, the driver 4 commands the switch 5 to be closed. Hence, the by-pass branch 3 shortcuts the first entry node 11 with the second entry node 13, so the first group of LEDs 1 does not receive electric supply. In this case, the second group of LEDs 2 is the only group of LEDs which emit light in this zone of the luminous device. The three LEDs 2 of the second group of LEDs emit light with an intensity suitable for the position light functionality of the headlamp. The driver 4, which commands the position of the switch 5, also adapts the current in the LEDs branch so that the three LEDs of the second group emit light with an adequate luminous intensity for this function. The light emitted by these LEDs will be projected by the lightguide shown in Figure 1.

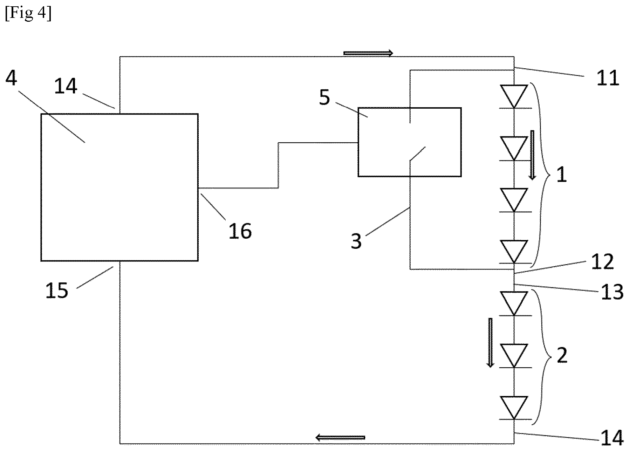

Figure 4 shows a second state of this electronic assembly.

In this figure, the driver 4 commands the switch 5 to be open. Hence, the by-pass branch 3 is open, so the current goes through the first group of LEDs 1. In this case, both the first group 1 of LEDs and the second group 2 of LEDs emit light in this zone of the luminous device. The seven LEDs of both groups emit light with an intensity suitable for the DRL functionality of the headlamp. The driver 4, which commands the position of the switch 5, also adapts the current in the LEDs branch so that the seven LEDs of the both groups emit light with an adequate luminous intensity for this function. The light emitted by these LEDs will be projected by the same lightguide shown in Figure 1.

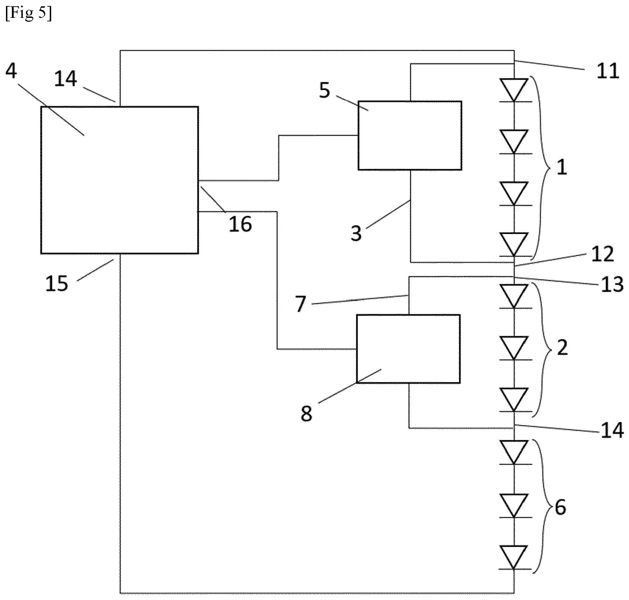

Figure 5 shows an alternative electronic arrangement of some elements of an automotive lighting device according to the invention.

In this case, this arrangement could be installed in a rear lamp device, which provides the functionalities of brake light, rear position light and fog light.

In this case, apart from the first group 1 of LEDs, the second group 2 of LEDs, the first by-pass branch 3 and the driver, there is a third group 6 of three LEDs and a second by-pass branch 7, which connects the second entry node 13 with the second exit node 14.

In a similar case as the one shown in Figures 2, 3 and 4, this device works in an analogue manner.

When brake light is required, the second and third group of LEDs need to be activated, so the first switch 5 of the first by-pass branch 3 is closed (so current does not run through the first group of LEDs) and the second switch 8 of the second by-pass branch 7 is open, so that current runs through the second group of LEDs 2. Since the third group of LEDs 6 does not have any associated by-pass branch, current runs through it whenever the LED section is fed with electric supply.

When rear position light is required, only the third group of LEDs 6 need to be activated, so the switches 5, 8 of both the first and the second by-pass branches 3, 7 are closed (so current does not run either through the first group of LEDs or through the second), so that current only runs through the third group of LEDs.

When fog light is required, the first and third group of LEDs 1, 6 need to be activated, so the second switch 8 of the second by-pass branch 7 is closed (so current does not run through the second group of LEDs 2) and the first switch 5 of the first by-pass branch 3 is open, so that current runs through the first group of LEDs 1. Since the third group of LEDs 6 do not have any associated by-pass branch, current runs through it whenever the LED section is fed with electric supply.

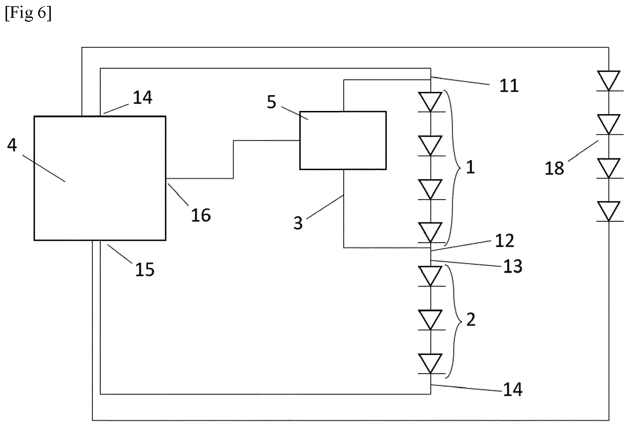

Figure 6 shows a different feature of the invention, that may be combined with the embodiments of any of Figures 2 to 5.

In this case, there is an additional group of LEDs 18 which are also fed and controlled by the driver 4. However, these additional group of LEDs 18 does not take part in the controlled functions of the first, second and third group of LEDs. However, the presence and operation of this additional group of LEDs 18 is compatible with any of the embodiments described above.

This additional group of LEDs 18 can be configured to provide a lighting function which is different from the lighting functions performed by the first, second and third group of LEDs. However, this additional group of LEDs 18 may be installed in the same substrate as these first, second and third group of LEDs.

## Claims

1. Automotive luminous device (10), comprising:
• a first group of light sources (1), the first group (1) comprising a first entry node (11) and a first exit node (12);
• a second group of light sources (2), the second group (2) comprising a second entry node (13) and a second exit node (14), wherein the second group of light sources (2) is arranged in series with the first group of light sources (1);
• a driver (4) configured to receive a command from a control module and to manage electric supply for the first group of light sources (1) and for the second group of light sources (2),
**characterized in that** :
• the luminous device (10) further comprises a first by-pass branch (3) connecting the first entry node (11) with the first exit node (12) by the interposition of a first switch (5);
• the driver (4) is configured to open and close the first switch (5) in function of the command received from the control module, wherein the driver is configured to activate the first group of light sources to provide a first lighting function in combination with the second group of light sources when the first switch (5) is open, and to activate the second group of light sources to provide a second lighting function when the first switch (5) is closed; and
• the luminous device (10) further comprises an optical element (9) being configured to receive the light from the first group of light sources (1) and from the second group (2) of light sources when the first switch (5) is open, or from the second group (2) of light sources when the first switch (5) is closed and being configured to project the receiving light outside the luminous device.

2. Automotive luminous device (10) according to claim 1, wherein the driver (4) is also configured to provide a different voltage for the groups of light sources (1, 2) depending on the command received from the control module.

3. Automotive luminous device (10) according to claim 1 or claim 2, further comprising:
• a third group of light sources (6), the third group of light sources (6) comprising a third entry node and a third exit node, wherein the third group of light sources (6) is arranged in series with the first group of light sources (1) and with the second group of light sources (2); and
• a second by-pass branch (7), connecting the first entry node or the second entry node with the third entry node by the interposition of a second switch (8);
wherein
• the driver (4) is further configured to provide electric supply for the third group of light sources (6), the driver (4) being also configured to open and close the second switch (8), and also configured to activate the third group of light sources (6) to provide a third lighting function when the second switch (8) is closed; and
• the optical element (9) is further configured to receive the light from the third group of light sources (6) and project it outside the luminous device (10).

4. Automotive luminous device (10) according to claim 3, wherein the third lighting function is a fog light function or a turning indicator function.

5. Automotive luminous device (10) according to any of the preceding claims, wherein the first switch and/or the second switch comprises a transistor, such as a Bipolar Junction Transistor or a Metal Oxide Semiconductor Field-Effect Transistor.

6. Automotive luminous device (10) according to any of the preceding claims, wherein the first group of light sources and/or the second group of light sources comprises at least two light sources arranged in series.

7. Automotive luminous device (10) according to any of the preceding claims, wherein the optical element comprises a light guide or a reflector.

8. Automotive luminous device (10) according to any of the preceding claims, wherein the first lighting function is a position light function and the second lighting function can be a function chosen between daytime running light function and brake light function.

9. Automotive headlamp (100) or rear lamp comprising an automotive luminous device (10) according to any of the preceding claims.
